# EUROPÄISCHE PATENTSCHRIFT

(11) **EP 0 933 237 B1**
(45) Veröffentlichungstag und Bekanntmachung des Hinweises auf die Patenterteilung: **29.09.2004**
(21) Anmeldenummer: 98123974.2
(22) Anmeldetag: 17.12.1998
(51) Int. Cl.: B60C 23/06, B60C 23/04

(54) **Vorrichtung zur Überwachung des Luftdrucks eines Fahrzeugreifens**
Method for monitoring the pressure of vehicle tyres
Procédé pour surveiller la pression d'un pneumatique d'un véhicule

(30) Priorität: 29.01.1998 DE 19803386
(43) Veröffentlichungstag der Anmeldung: 04.08.1999
(73) Patentinhaber: DaimlerChrysler AG, 70567 Stuttgart (DE)
(72) Erfinder: Braun, Fritz, 71394 Kernen (DE); Hrycej, Tomas Dr., 89075 Ulm (DE); Lich, Thomas, 71397 Nellmersbach (DE); Merz, Kurt-Jürgen, 70191 Stuttgart (DE); Spieth, Uwe, 73776 Altbach (DE); Stiltz, Winfried, 71384 Weinstadt (DE)

(56) Entgegenhaltungen:
- EP-A- 0 228 636
- EP-A- 0 455 993
- EP-A- 0 652 121
- EP-A- 0 729 855

## Beschreibung

Die Erfindung bezieht sich auf eine Vorrichtung zur Überwachung des Luftdrucks eines Fahrzeugreifens nach dem Oberbegriff des Anspruchs 1. Mit derartigen Vorrichtungen ist es möglich, den Reifenluftdruck, nachfolgend auch einfach Reifendruck genannt, auch bei fahrendem Fahrzeug laufend zu überwachen und dadurch eventuelle übermäßige Druckeinbrüche rechtzeitig zu erkennen.

Es ist bekannt, den Druck von Fahrzeugreifen indirekt aus Raddrehzahlmessungen abzuleiten, die häufig ohnehin benötigt werden, z.B. für ein Antiblockiersystem und/oder ein Antriebsschlupfregelsystem. Diese Vorrichtungen zur indirekten Reifendrucküberwachung, wie sie z.B. in den Offenlegungsschriften DE 44 09 816 A1 und DE 196 19 393 A1 sowie der Patentschrift US 5.513.523 offenbart sind, benutzen normalerweise Vergleichsoperationen zwischen Raddrehzahlen verschiedener Fahrzeugräder und erlauben daher meist nur die Erkennung des Druckabfalls eines Reifens relativ zu anderen Reifen, jedoch keine Ermittlung des absoluten Reifendruckwertes.

Aus der Patentschrift US 5.285.523 ist die Verwendung mehrerer paralleler neuronaler Netze mit unterschiedlichen Eigenschaften in einer Vorrichtung zur Erkennung des Fahrzustands eines Fahrzeugs bekannt, wobei insbesondere die Art der befahrenen Straße, d.h. Autobahn oder Ortsdurchfahren etc., und die Verkehrslage unter Berücksichtigung des erfaßten Fahrerverhaltens ermittelt werden sollen.

In der Offenlegungsschrift DE 43 40 746 A1 wird eine Diagnoseeinrichtung offenbart, die unter anderem auch eine Überwachung des Drucks von Fahrzeugreifen ermöglicht und dabei von einer nicht-trainierbaren Schätzeinheit in Form eines sogenannten Zustandsbeobachters Gebrauch macht, wobei das aus einer Radaufhängung und einem Rad bestehende dynamische System durch ein zugehöriges Zustandsdifferentialgleichungssystem beschrieben wird, das dem Zustandsbeobachter bzw. Zustandsschätzer zugrunde liegt.

Aus der Patentschrift DE 29 05 931 C3 ist es bekannt, den Druck eines Fahrzeugreifens indirekt auf der Basis einer Erfassung der Vertikalbeschleunigung des Reifens bzw. eines damit verbundenen Fahrzeugteils indirekt zu überwachen. Speziell werden mit der dortigen Vorrichtung einzelne spektrale Anteile der erfaßten Vertikalbeschleunigungsinformation für die Reifendrucküberwachung ausgewertet. Dazu enthält die Vorrichtung pro Fahrzeugrad alternativ einen Beschleunigungssensor und zwei parallele, unterschiedliche Frequenzbereiche auswertende Auswerteschaltungen oder einen ersten Beschleunigungssensor an einem tragenden Bauteil jedes Rades und einen zweiten Beschleunigungssensor an einer dem Rad naheliegenden Stelle der Fahrzeugkarosserie sowie je eine den Beschleunigungssensoren nachgeschaltete Auswerteschaltung mit einem Bandpaß-Frequenzfilter. In beiden Fällen sind den jeweiligen Frequenzfiltern ein Gleichrichter und ein Integrator nachgeschaltet. Eine der Auswerteschaltung nachgeschaltete Vergleichseinheit vergleicht die Auswerteinformationen einer jeweiligen Auswerteschaltung mit denen einer anderen oder mit vorgegebenen Schwellwerten, um dadurch für jedes Rad den Reifendruck und die Stoßdämpfer zu überwachen.

Die Offenlegungsschrift DE 39 37 403 A1 gibt die allgemeine Lehre, Schwingungen an den Radträgern eines Fahrzeugrades mindestens in Vertikal- und Längsrichtung zu erfassen und die so gewonnene Schwingungsinformation z.B. zur Reifenluftdrucküberwachung heranzuziehen. Dabei kann das dortige System adaptiv so ausgelegt sein, daß es die Eigenfrequenz jeder Radaufhängung über einen längeren Zeitraum lernt.

Die Offenlegungsschrift EP 0 455 993 A2 offenbart eine Vorrichtung zum Ermitteln und/oder Überwachen des Zustands einer technischen Komponente eines Kraftfahrzeuges, z.B. der Reifen hinsichtlich des Reifendrucks, wobei in das Fahrwerk des Fahrzeugs eingeleitete Schwingungen an Bauteilen der Radaufhängung relativ zur Karosserie gemessen werden. Dabei werden Werte der insbesondere stochastisch angeregten Schwingungen von mit der technischen Komponente gekoppelten Bauteilen unterschiedlicher Radaufhängungen gemessen und diese zu charakteristischen Kennwerten verarbeitet, die mit zuvor in gleicher Weise ermittelten zugeordneten Kennwerten unter Bestimmung von Abweichungen in einem vorbestimmten fahrzeugspezifischen Frequenzbereich verglichen werden. Die Erfassung des Reifendrucks beinhaltet bei diesem System die Messung der Vertikalbeschleunigungen mindestens an einem Rad der Vorderachse und einem Rad der Hinterachse. Daraus wird eine für die Reifendruckbestimmung relevante Übertragungsfunktion bestimmt, die formal die vordere Radachse mit der hinteren Radachse verknüpft, was physikalisch in komplexer Form über die Karosserie realisiert ist.

Aus der Offenlegungsschrift EP 0 729 855 A1, welche mit den Merkmalen des Anspruches 1 korrespondiert, ist es bekannt, zur Ermittlung des Luftdrucks ein zuvor trainiertes neuronales Netz einzusetzen, wobei das Training anhand von Beispieldaten mit verschiedenen Reifenluftdruckwerten und Fahrzustandswerten, wie Fahrzeuglängsgeschwindigkeitswerten, Beschleunigungs- und Bremswerten sowie Geradeaus- bzw. Kurvenfahrtwerten, vorgenommen wird und in der anschließenden Betriebsphase der Reifendruck aus den entsprechenden, gemessenen Eingangsgrößen durch das trainierte Netz ermittelt wird.

Der Erfindung liegt als technisches Problem die Bereitstellung einer Vorrichtung der eingangs genannten Art zugrunde, mit der sich der Fahrzeugreifenluftdruck mit relativ geringem Aufwand und vergleichsweise hoher Genauigkeit und Stabilität und bei Bedarf individuell für jedes Fahrzeugrad getrennt ohne die Notwendigkeit der Berücksichtigung von Messungen an anderen Fahrzeugrädern ermitteln läßt.

Die Erfindung löst dieses Problem durch die Bereitstellung einer Vorrichtung mit den Merkmalen des Anspruchs 1. Bei dieser Vorrichtung beinhaltet die Auswerteeinrichtung eine trainierbare Schätzeinheit, insbesondere ein neuronales Netz, die anhand von vorgebbaren Trainingsbeispieldaten mit verschiedenen Reifenluftdruckwerten und Fahrzeuglängsgeschwindigkeitswerten trainiert wird und die im trainierten Zustand den Reifenluftdruck wenigstens in Abhängigkeit von den eingangsseitig direkt oder vorverarbeitet zugeführten Vertikalbeschleunigungs- und Fahrzeuglängsgeschwindigkeits-Meßdaten ermittelt. Zur Reifenluftdrucküberwachung mit dieser Vorrichtung reichen bereits die Meßwerte der Vertikalbeschleunigung des Reifens oder eines damit verbundenen Fahrzeugbauteils sowie der Fahrzeuglängsgeschwindigkeit, nachfolgend auch einfach Fahrzeuggeschwindigkeit genannt, aus. Durch die Verwendung der trainierbaren Schätzeinheit ermöglicht die Vorrichtung eine Reifenluftdrucküberwachung mit hoher Genauigkeit und Stabilität, wobei radindividuell der absolute Reifenluftdruck ermittelt werden kann. Des weiteren besitzt die Vorrichtung eine oder mehrere zusätzliche Komponenten, wie folgt.

Als eine erste Komponente ist eine Einrichtung zur Erzeugung einer Straßenzustandsinformation in Abhängigkeit von den Vertikalbeschleunigungs-Meßdaten und den Fahrzeuglängsgeschwindigkeits-Meßdaten vorgesehen, mit der die Aktivierung und Deaktivierung der Schätzeinheit in Abhängigkeit davon gesteuert wird, ob die momentane Vertikalbeschleunigung und Fahrzeuglängsgeschwindigkeit jeweils innerhalb oder außerhalb zugehöriger, vorgebbarer Wertebereiche liegen. Dadurch läßt sich der aktive Betrieb der Schätzeinheit auf diejenigen Situationen beschränken, die in dem Bereich liegen, für den die Schätzeinheit zuvor trainiert wurde.

Als eine zweite Komponente sind der Schätzeinheit Mittel zur Unterdrückung derjenigen Schätzwerte der Schätzeinheit nachgeschaltet, die aus Situationen außerhalb des Bereichs resultieren, für welchen die Schätzeinheit trainiert wurde.

Als eine dritte Komponente wird die Vertikalbeschleunigungsinformation einer Vorverarbeitung durch eine zugehörige Einrichtung unterzogen, die mindestens eine A/D-Wandlereinheit und eine nachgeschaltete Systemzustandsbestimmungseinheit beinhaltet. Letztere berechnet eine oder mehrere zeitliche Ableitungen der gemessenen Vertikalbeschleunigung und führt diese Informationen neben der gemessenen Vertikalbeschleunigung selbst der Schätzeinheit als Eingangsgrößen zu.

Alternativ zu dieser Ableitungseinheit beinhaltet eine als eine vierte Komponente vorgesehene Vorverarbeitungseinrichtung im Anschluß an eine A/D-Wandlereinheit eine FFT-Einheit zur Durchrührung einer Fast-Fourier-Transformation und eine nachgeschaltete Selektionseinheit, mit der diejenigen spektralen Anteile aus dem Ausgangssignal der FFT-Einheit ausgewählt werden können, welche die wesentliche Information über den Reifenluftdruck enthalten.

Als eine fünfte Komponente sind ein Datenspeicher, der in einer Trainingsbeispieldatenaufzeichnungsphase anstelle der Schätzeinrichtung eingesetzt ist und in dieser Aufzeichnungsphase die aufgenommenen Trainingsbeispieldaten speichert, und eine Bewertungs- und Optimierstufe vorgesehen, die in einer der Aufzeichnungsphase folgenden Trainingsphase der Schätzeinheit nachgeschaltet ist, um sie anhand der ihr vom Datenspeicher gelieferten Trainingsbeispieldaten zu trainieren.

Bei einer nach Anspruch 2 weitergebildeten Vorrichtung beinhaltet die Vorverarbeitungseinrichtung ein der A/D-Wandlereinheit vorgeschaltetes Anti-Aliasing-Filter, das Abtastfehler der nachfolgenden A/D-Wandlereinheit verhindert.

Bei einer nach Anspruch 3 weitergebildeten Vorrichtung beinhaltet die Vorverarbeitungseinrichtung im Anschluß an die A/D-Wandlereinheit ein digitales Tiefpaß-Glättungsfilter mit anschließendem Hochpaß-Offsetfilter. Durch die vom Tiefpaß-Glättungsfilter bewirkte Signalglättung kann im anschließenden Hochpaß-Offsetfilter eine deutlich niedrigere Abtastrate verwendet werden. Zudem kompensiert das Hochpaß-Offsetfilter eine im Minutenbereich liegende Drift üblicher Vertikalbeschleunigungsaufnehmer.

Vorteilhafte Ausführungsformen der Erfindung sind in den Zeichnungen dargestellt und werden nachfolgend beschrieben. Hierbei zeigen:
- Fig. 1: ein Blockschaltbild einer Anordnung zur Aufzeichnung von Trainingsbeispieldaten zum Trainieren einer Schätzeinheit eines ersten Beispiels einer Vorrichtung zur Fahrzeugreifenluftdrucküberwachung,
- Fig. 2: ein Blockschaltbild eines in einer Vorverarbeitungseinrichtung von Fig. 1 verwendeten digitalen Tiefpaßfilters,
- Fig. 3: ein Blockschaltbild eines in der Vorverarbeitungseinrichtung von Fig. 1 verwendeten Hochpaß-Offsetfilters,
- Fig. 4: ein Blockschaltbild einer in der Anordnung von Fig. 1 verwendeten Systemzustandsbestimmungseinheit,
- Fig. 5: ein Blockschaltbild einer in der Anordnung von Fig. 1 verwendeten Straßenzustandsbestimmungseinheit,
- Fig. 6: ein Blockschaltbild einer in der Straßenzustandsbestimmungseinheit von Fig. 5 verwendeten Fensterungseinheit;
- Fig. 7: ein Blockschaltbild eines in der Anordnung von Fig. 1 verwendeten Sequenzers,
- Fig. 8: ein Blockschaltbild einer Anordnung zum Trainieren der Schätzeinheit anhand der mit der Anordnung von Fig. 1 aufgenommenen Trainingsbeispieldaten,
- Fig. 9: ein Blockschaltbild der Schätzeinheit von Fig. 8,
- Fig. 10: ein Blockschaltbild der Vorrichtung zur Fahrzeugreifenluftdrucküberwachung mit der durch die Anordnung von Fig. 8 trainierten Schätzeinheit,
- Fig. 11: ein Blockschaltbild eines zweiten Beispiels einer Vorrichtung zur Fahrzeugreifenluftdrucküberwachung,
- Fig. 12: ein Blockschaltbild eines dritten Beispiels einer Vorrichtung zur Fahrzeugreifenluftdrucküberwachung,
- Fig. 13: ein Blockschaltbild eines vierten Beispiels einer Vorrichtung zur Fahrzeugreifenluftdrucküberwachung,
- Fig. 14: ein Blockschaltbild eines in den Ausführungsbeispielen der Fig. 11 bis 13 der Schätzeinheit nachgeschaltet verwendbaren Tiefpaßfilters und
- Fig. 15: ein Blockschaltbild eines in den Ausführungsbeispielen der Fig. 11 bis 13 der Schätzeinheit nachgeschaltet verwendbaren nichtlinearen Tiefpaßfilters.

Den gezeigten Ausführungsbeispielen der Erfindung liegt sämtlich das Prinzip der Auswertung der Vertikalkonponente der Achsbeschleunigung einer jeweiligen Fahrzeugachse zur indirekten, laufenden Bestimmung und damit Überwachung des Reifenluftdrucks, nachfolgend abgekürzt auch Reifendruck bezeichnet, eines Fahrzeugs mittels einer trainierbaren Scnätzeinheit, insbesondere eines neuronalen Netzes, zugrunde. Die Verwendung einer solchen trainierbaren Schätzeinheit erlaubt eine geschlossene Auswertung des Achsbeschleunigungssignals, wobei die Schätzeinheit in der Lage ist, die stochastische Anregung durch die Straße von der Reaktion des Fahrwerks zu trennen und dadurch den absoluten Reifendruck zu schätzen. Die Auswertung erfolgt unabhängig für jedes Rad einzeln. Als einzige Hilfsgröße wird die Fahrzeuglängsgeschwindigkeit V, nachfolgend auch einfach Fahrzeuggeschwindigkeit bezeichnet, benötigt, die im allgemeinen ohnehin im Fahrzeug zur Verfügung steht. Durch ein Trainieren mit Beispielen über das dynamische Verhalten des Fahrwerks bei verschiedenen Reifendrücken läßt sich das Auswertesystem in jeweils geeigneter Weise an die verschiedenen Einsatzbedingungen anpassen. Dabei werden in einer anfänglichen Aufzeichnungsphase bei verschiedenen Reifendrücken die Achsbeschleunigungen beim Befahren einer speziell ausgewählten Teststrecke erfaßt und nach Durchlaufen einer speziellen Signalvorverarbeitung zusammen mit den in dieser Phase direkt gemessenen Reifendrücken sowie der Fahrzeuggeschwindigkeit auf einem Datenträger aufgezeichnet. In einer anschließenden Trainingsphase wird dann mit den aufgezeichneten Trainigsbeispieldaten unter Einsatz eines Optimierungsverfahrens die Schätzeinheit so trainiert, daß ihre Reifendruckprognose möglichst gut mit den aufgezeichneten Reifendrücken innerhalb eines gewählten Geschwindigkeitsbereiches übereinstimmt. Nach diesem Training wird die Schätzeinheit im eigentlichen Anwendungsbetrieb so eingesetzt, daß das Achsbeschleunigungssignal nach der Signalvorverarbeitung direkt von ihr zur Bestimmung des Reifendrucks verarbeitet wird. Unter Beachtung der momentanen Fahrzeuggeschwindigkeit und des Straßenzustandes wird das Ergebnis der Reifendruckschätzung noch durch ein Filter so stark geglättet, wie es für eine sichere, störungsfreie Reifendruckschätzung erforderlich ist.

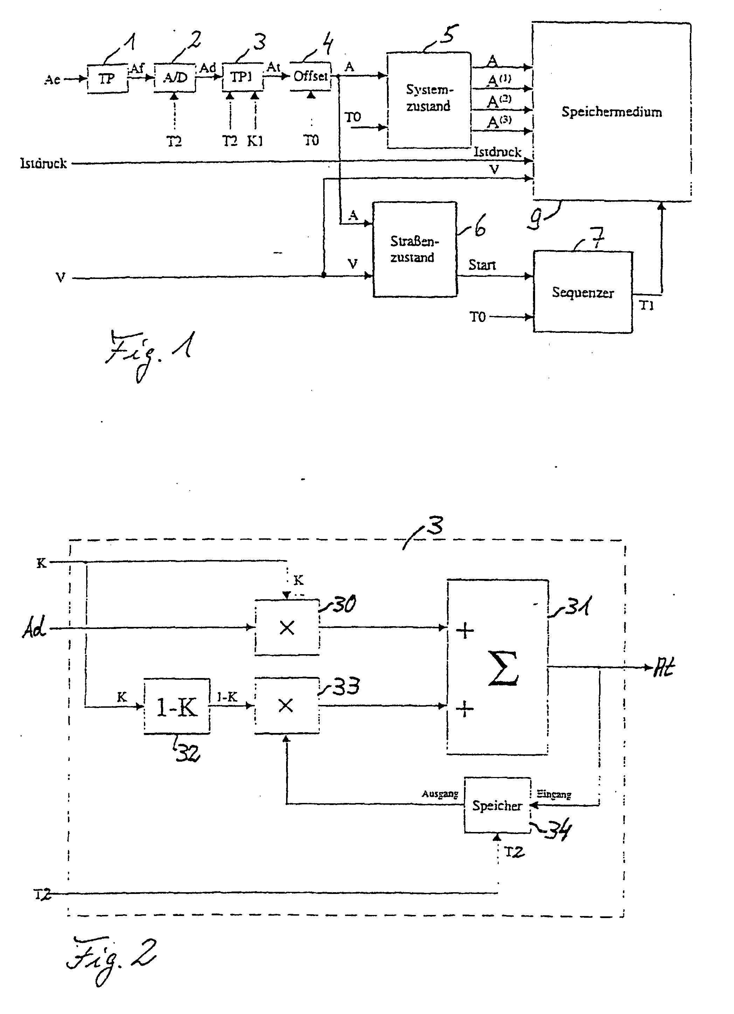

Fig. 1 zeigt die in der Aufzeichnungsphase verwendete Anordnung zur Aufzeichnung der Trainingsbeispieldaten. Die Anordnung beinhaltet eine mehrstufige Vorverarbeitungseinrichtung, die seriell hintereinandergeschaltet ein analoges Tiefpaßfilter 1, einen A/D-Wandler 2, ein digitales Tiefpaßfilter 3 und ein Hochpaß-Offsetfilter 4 beinhaltet. Das analoge Tiefpaßfilter 1 wandelt das von einer herkömmlichen, nicht gezeigten Achsbeschleunigungssensorik erhaltene, die momentane vertikale Achsbeschleunigung enthaltende Meßsignal Ae in ein Ausgangssignal Af mit einer Grenzfrequenz von etwa 150Hz und ausreichender Steilheit derart um, daß bei einer Abtastrate von z.B. T2=0,00025s im Ausgangssignal Ad des anschließenden A/D-Wandlers 2 keine sogenannten Aliaseffekte auftreten, welche die weitere Digitalrechnerverarbeitung stören würden. Als A/D-Wandler 2 kann ein handelsüblicher integrierter Schaltkreis mit beispielsweise 12 Bit Auflösung verwendet werden. Das vom A/D-Wandler 2 abgegebene digitalisierte Signal Ad wird im anschließenden digitalen Filter 3 in ein geglättetes Ausgangssignal At derart umgewandelt, daß in der anschließenden Komponente auf eine wesentlich langsamere Abtastrate von z.B. T0=0,002s übergegangen werden kann.

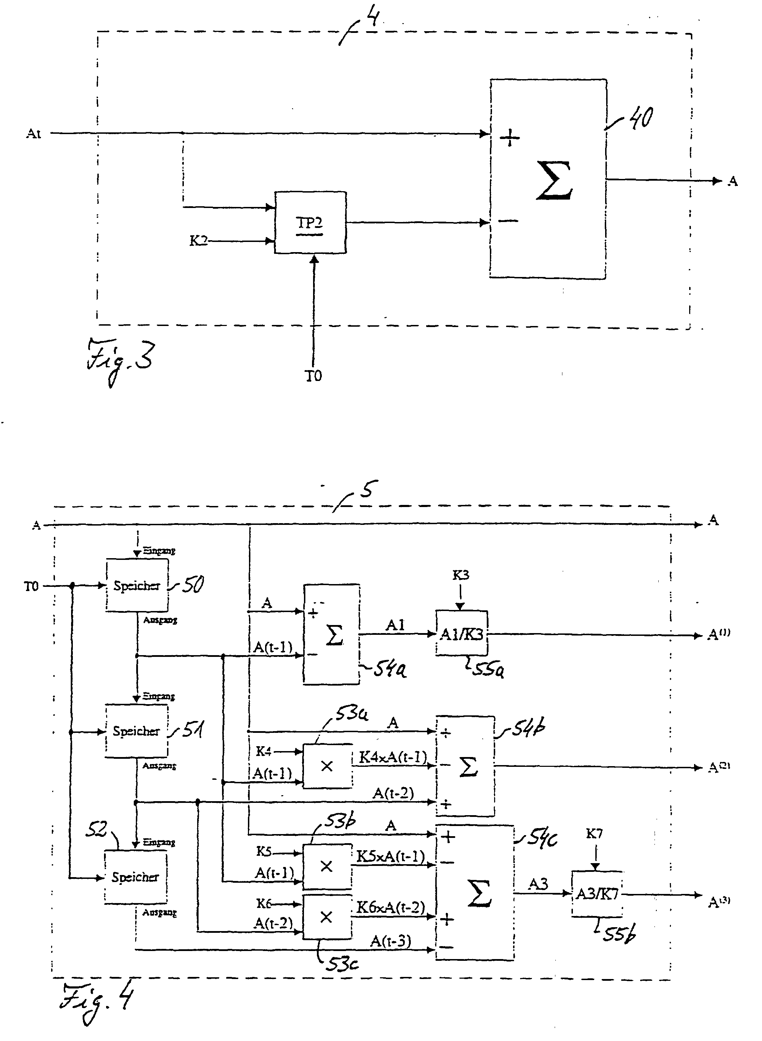

Fig. 2 zeigt ein detaillierteres Blockschaltbild des digitalen Filters 3. Das Eingangssignal Ad wird in einem Multiplizierer 30 mit einer Filterkonstanten K=K1 multipliziert und anschließend einem Summierer 31 zugeführt. Parallel dazu wird in einer Faktorbildungsstufe 32 der Faktor 1-K gebildet, der einem Multiplizierer 33 zwecks Multiplikation mit dem Inhalt eines Speichers 34 zugeführt wird, wobei dieses Mulitplikationsergebnis einem zweiten Eingang des Summierers 31 zugeführt wird. Das Summiererausgangssignal, welches das Ausgangssignal At des Filters 3 bildet, wird einem Eingang des Speichers 34 zugeführt, der dafür sorgt, daß eine Rückkopplung des Ausgangssignals At synchron mit dem Abtasttakt T=T2 erfolgt und das Tiefpaßfilter 3 dementsprechend zu diskreten Zeitpunkten aktualisiert wird. Alle anderen, in den gezeigten Beispielen vorgesehenen digitalen Tiefpaßfilter sind von einem der Fig. 2 entsprechenden Aufbau, soweit nichts anderweitiges gesagt ist.

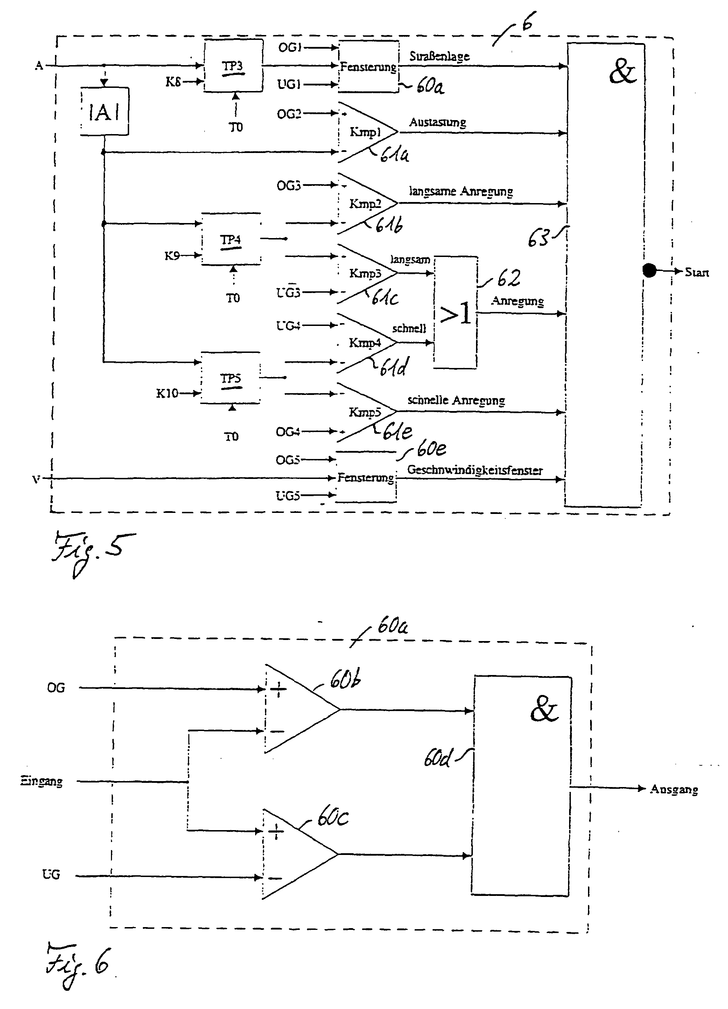

Das Hochpaß-Offsetfilter 4 dient zum einen der Reduktion der Abtastrate und zum anderen aufgrund seiner Hochpaßeigenschaften zur Kompensation der im Minutenbereich liegenden Drift der Achsbeschleunigungssensorik. Das Blockschaltbild von Fig. 3 zeigt detaillierter den Aufbau des Hochpaß-Offsetfilters 4. In einem Subtrahierer 40 wird vom eingangsseitig zugeführten Signal At des vorgeschalteten digitalen Tiefpaßfilters 3 das Ausgangssignal eines Tiefpaßfilters TP2 erster Ordnung subtrahiert und so das die Achsbeschleunigung A repräsentierende Ausgangssignal gebildet. Das Tiefpaßfilter TP2 erster Ordnung bestimmt mit seiner Filterkonstante K2 die Grenzfrequenz, und das ihm zugeführte Taktsignal T0 legt den Zeitpunkt der Aktualisierung des gefilterten Ausgangssignals A fest. Das Taktsignal T0 ist beispielsweise so gewählt, daß sich die Aktualisierungsrate um den Faktor acht reduziert, so daß sich z.B. eine Abtastrate von 2ms ergibt.

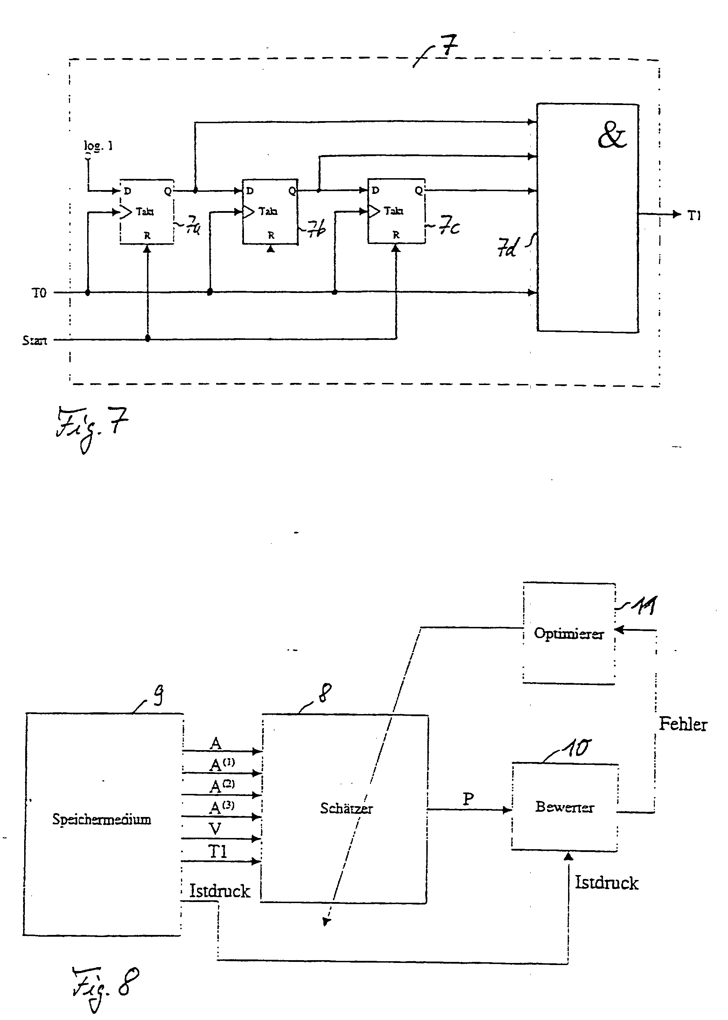

Der Vorverarbeitungseinrichtung ist gemäß Fig. 1 eine Systemzustandsbestimmungseinheit 5 nachgeschaltet, deren Aufbau detaillierter in Fig. 4 in weitgehend selbsterklärender Weise dargestellt ist. Die Systemzustandsbestimmungseinheit 5 dient der Ermittlung der zeitlichen Dynamik der gemessenen und vorverarbeiteten vertikalen Achsbeschleunigung A, indem sie zum einen diese Achsbeschleunigungsinformation A selbst durchläßt und zum anderen daraus deren erste zeitliche Ableitung A⁽¹⁾, zweite zeitliche Ableitung A⁽²⁾ und dritte zeitliche Ableitung A⁽³⁾ in Abhängigkeit des Taktes T0 ermittelt. Dazu sind drei entsprechende eingangsseitige, seriell hintereinander geschaltete Speicherelemente 50, 51, 52 vorgesehen, die zum jeweiligen Taktzeitpunkt des Taktsignals T0 die eingangsseitige Information an ihren Ausgang übernehmen und bis zum nächsten T0-Takt speichern. Die Speicherelementkette 50, 51, 52 erzeugt dadurch Signale A(t-1), A(t-2) und A(t-3), aus denen durch geeignet angeordnete Multiplizierer 53a, 53b, 53c und Addierer 54a, 54b, 54c sowie zwei Dividierer 55a, 55b nach einem üblichen Algorithmus die Werte A⁽¹⁾, A⁽²⁾, A⁽³⁾ der ersten, zweiten und dritten zeitlichen Ableitung der vertikalen Achsbeschleunigung A gebildet werden. Dabei finden geeignete Skalierungs- bzw. Multiplikationsfaktoren K3 bis K7 Verwendung.

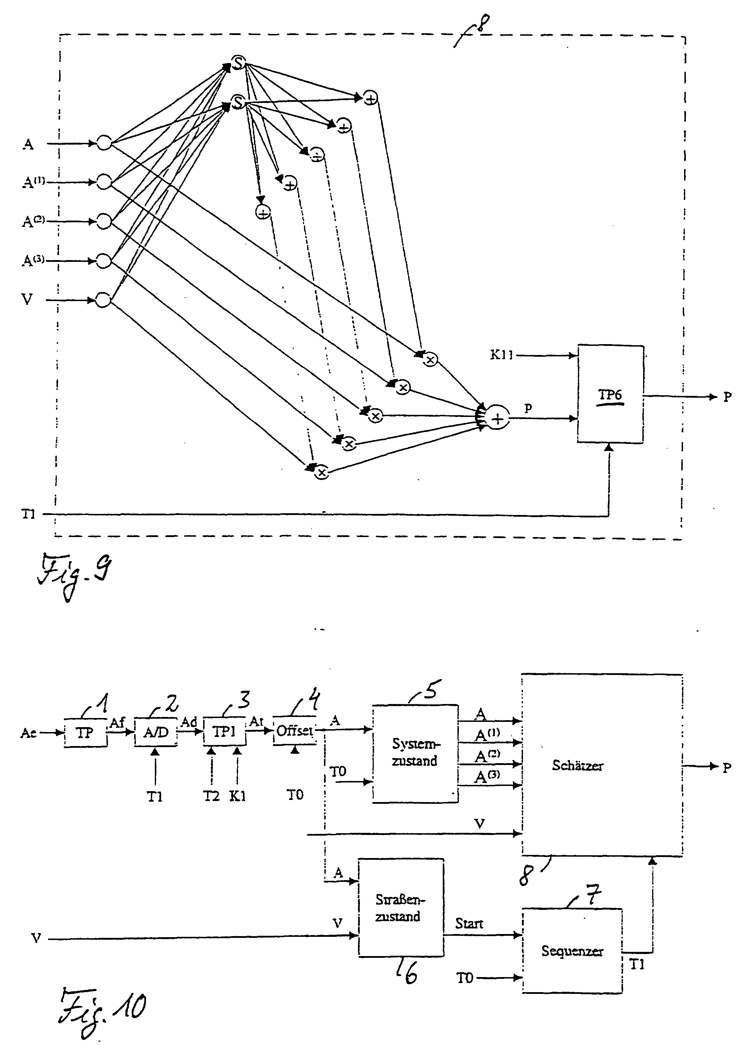

Parallel zur Systemzustandsbestimmungseinheit 5 ist in der Anordnung von Fig. 1 eine Straßenzustandsbestimmungseinheit 6 vorgesehen, deren Aufbau detaillierter in Fig. 5 dargstellt ist. Die Straßenzustandsbestimmungseinheit 6 dient dazu, die Eigenschaften der vom Fahrzeug befahrenen Strecke, im Fall eines Straßenfahrzeugs also einer Straße, in Abhängigkeit von der Fahrzeuggeschwindigkeit V zu bewerten und davon abhängig ein Freigabesignal "Start" abzugeben. Dazu wird das Achsbeschleunigungssignal A über ein digitales Tiefpaßfilter TP3 tiefpaßgefiltert und in einer anschließenden Fensterungseinheit 60a einer Fensterung unterzogen, was bei stark wechselnden Fahrbahnneigungen zu einer Inaktivierung des Freigabesignals "Start" führt.

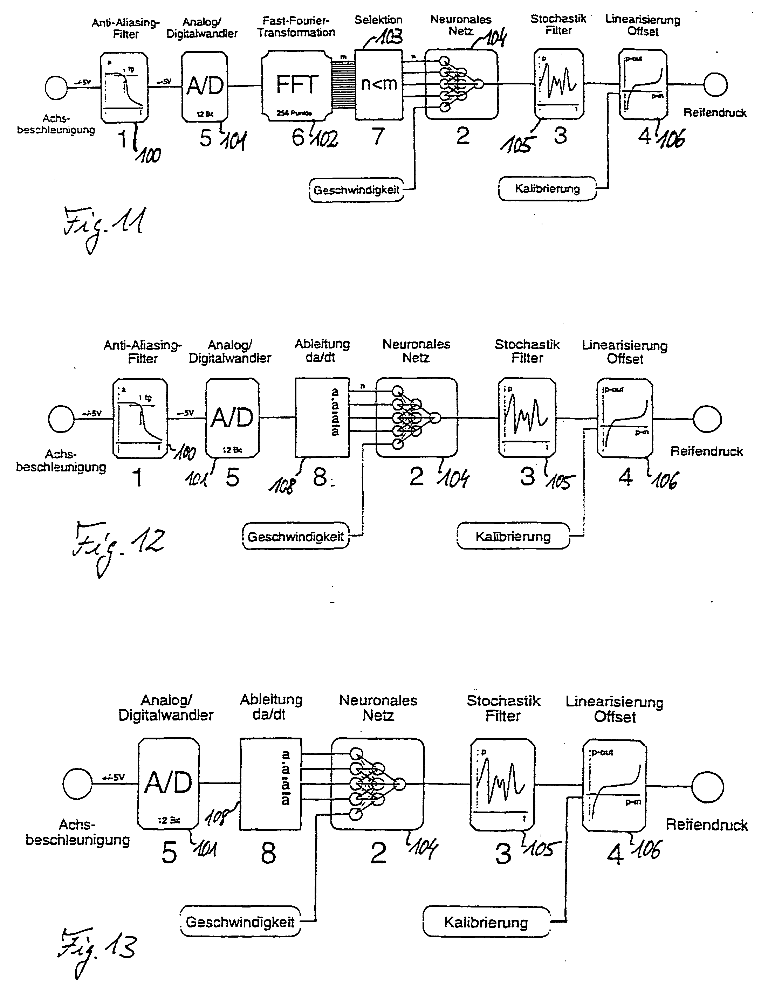

Fig. 6 zeigt detaillierter den Aufbau der Fensterungseinheit 60a. Das am Eingang anliegende tiefpaßgefilterte Achsbeschleunigungssignal wird dem invertierenden Eingang eines ersten Komparators 60b und dem nicht invertierenden Eingang eines zum ersten parallelen zweiten Komparators 60c zugeführt. Ein vorgebbarer oberer Grenzwert OG wird dem nicht invertierenden Eingang des ersten Komparators 60b zugeführt, während ein vorgebbarer unterer Grenzwert UG dem invertierenden Eingang des zweiten Komparators 60c zugeführt wird. Eine anschließende UND-Einheit 60d führt eine UND-Verknüpfung der beiden Komparatorausgangssignale zur Erzeugung des Fensterungsausgangssignals durch. Somit wird von der Fensterungseinheit 60a genau dann ein freigebender hoher Signalpegel abgegeben, wenn das Eingangssignal innerhalb des durch den unteren Grenzwert UG und den oberen Grenzwert OG festgelegten Bereichs liegt.

Das Freigabesignal Start" wird außerdem dann inaktiv gesetzt, wenn der Achsbeschleunigungsbetrag |A| einen vorgebbaren Grenzwert OG2 überschreitet, was durch einen zugehörigen Komparator 61a erkannt wird. Zwei weitere digitale Tiefpaßfilter TP4, TP5 sorgen zusammen mit vier zugehörigen weiteren Komporatoren 61b bis 61e dafür, daß das Freigabesignal "Start" dann nicht aktiviert wird, wenn der Achsbeschleunigungsbetrag |A| unter Berücksichtigung der für die Tiefpaßfilter TP4, TP5 unterschiedlich gewählten Zeitkonstanten außerhalb jeweiliger Wertebereiche liegt, die jeweils durch einen zugehörigen unteren Grenzwert UG3, UG4 und einen zugehörigen oberen Grenzwert OG3, OG4 vorgegeben werden. Die Ausgangssignale von zwei Komparatoren 61c, 61d werden dabei noch in einer entsprechenden logischen Verknüpfungseinheit 62 darauf abgefragt, ob sie beide auf hohem Pegel liegen oder nicht. Die Überwachung eines durch einen entsprechenden unteren Grenzwert UG5 und oberen Grenzwert OG5 vorgegebenen Fahrzeuggeschwindigkeitsfensters erfolgt in einer zweiten Fensterungseinheit 60e, die einen zur Fensterungseinheit 60a von Fig. 6 identischen Aufbau besitzt. Nur wenn alle genannten Bedingungen erfüllt sind, wird das Freigabesignal "Start" abgegeben, was über eine entsprechende UND-Logikeinheit 63 erfolgt, der die verschiedenen Fensterungs- und Komparatorausgangssignale zugeführt sind.

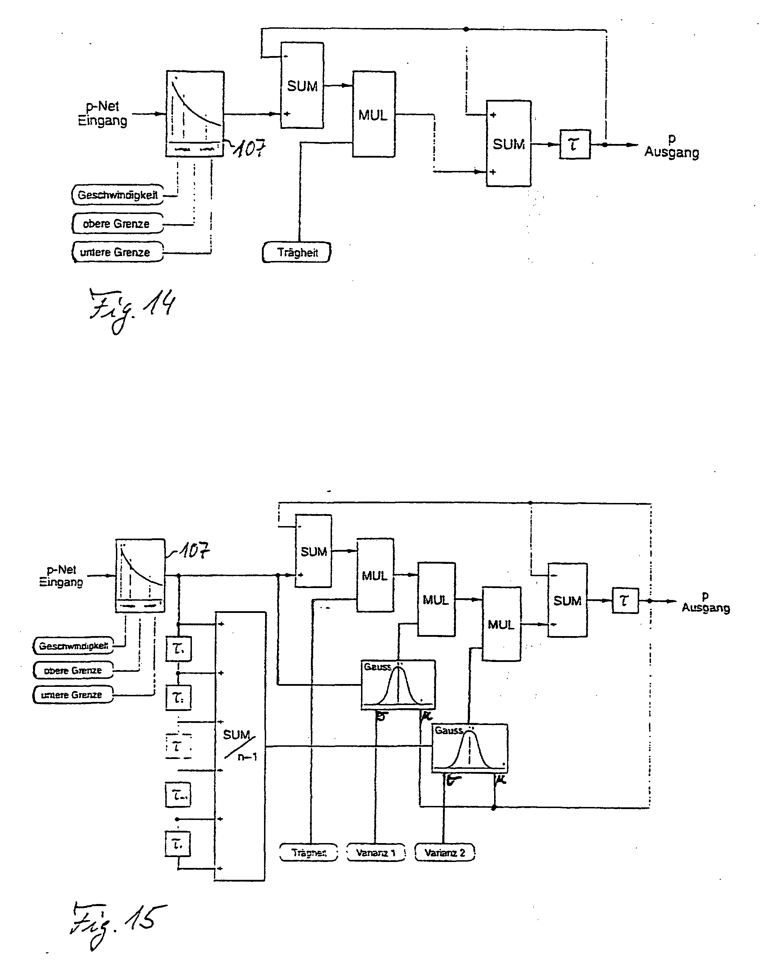

Das "Start"-Freigabesignal der Straßenzustandsbestimmungseinheit 6 wird einem nachgeschalteten Sequenzer 7 zugeführt, dessen Aufbau in Fig. 7 detaillierter dargestellt ist. In diesem ist aus dem "Start"-Eingangssignal und dem zugeführten Taktsignal T0 ein Zähler gebildet, der dafür sorgt, daß ein Taktsignal T1 zur Aktualisierung eines nachgeschalteten Speichers 8, wie in Fig. 1 dargestellt, während der Aufzeichnungsphase sowie der Schätzeinheit in der späteren Anwendungsphase immer nur dann erzeugt wird, wenn ein gültiger Straßenzustand jeweils so lange bestehen bleibt, bis alle zeitlichen Ableitungen A⁽¹⁾, A⁽²⁾, A⁽³⁾ in der Systemzustandsbestimmungseinheit 5 berechnet worden sind. Die in Fig. 7 angegebenen Signalabkürzungen D, Q und R entsprechen den in der Digitaltechnik üblichen Bezeichnungen, wie sie z.B. für D-Flip-Flops verwendet werden. So bezeichnet D jeweils eine Dateneingang, dessen Signalzustand mit dem T0-Takt am Ausgang Q wieder abgegeben wird. Drei solchen seriellen Einheiten 7a, 7b, 7c ist dann eine UND-Logikeinheit 7d nachgeschaltet.

Der Systemzustandsbestimmungseinheit 5 ist ein digitales Speichermedium 9, z.B. ein RAM, ROM EPROM, EEPROM oder eine Festplatte, Diskette oder CD, nachgeschaltet, welches die von der Systemzustandsbestimmungseinheit 5 ermittelten Informationen A, A⁽¹⁾, A⁽²⁾, A⁽³⁾ über die zeitliche Dynamik der vertikalen Achsbeschleunigung A sowie die momentane Fahrzeuggeschwindigkeit V und den aktuellen gemessenen Reifendruck als Istdruckwert zusammen mit dem vom Sequenzer 7 gelieferten Taktsignal T1 als Trainingsbeispieldaten speichert, mit denen anschließend eine trainierbare Schätzeinheit durch Training optimiert wird.

Dieses Training erfolgt mittels einer Anordnung, wie sie in Fig. 8 gezeigt ist. Der trainierbaren Schätzeinheit 8, die vorzugsweise durch ein neuronales Netz, wie einem sogenannten Mehrschicht-Perceptronnetz realisiert ist, werden zum Training die zuvor aufgezeichneten und im Speicher 9 abgelegten Trainingsbeispieldaten über das vertikale Achsbeschleunigungssignal A, deren erste, zweite und dritte Ableitung A⁽¹⁾, A⁽²⁾, A⁽³⁾ sowie die Fahrzeuggeschwindigkeit V zusammen mit dem Abtasttakt T1 als Straßenzustandsinformation zugeführt, wobei eine Folge verschiedener Aufzeichnungen bei verschiedenen Reifendrücken zusammen mit dem jeweiligen Istdruck abgerufen und zur Optimierung der Schätzeinheit 8 verwendet wird. Dabei vergleicht eine Bewertungseinheit 10 den von der Schätzeinheit 8 gelieferten Reifendruckschätzwert P mit dem Istdruck. Das daraus abgeleitete Fehlersignal wird einer Optimierungseinheit 11 zugeführt, welche auf die Schätzeinheit 8 entsprechend einwirkt d.h. deren freie Parameter entsprechend neu setzt. Als Trainingsbeispieldaten können z.B. solche verwendet werden, bei denen der Reifendruck in Abständen von 5% bezogen auf den normalen Reifendruck und die Fahrzeuggeschwindigkeit in einem vorgegebenen Geschwindigkeitsbereich von z.B. 25km/h bis 60km/h variiert werden. Es zeigt sich, daß Beschleunigungs- und Verzögerungsvorgänge sowie Fahrzeuglaständerungen nur geringen Einfluß auf die Reifendruckschätzung haben.

Fig. 9 zeigt detaillierter den Aufbau der Schätzeinheit 8 mit einem Mehrschicht-Perzeptronnetz. Den Eingangsschichtneuronen sind die vertikale Achsbeschleunigung A, deren erste bis dritte Ableitung A⁽¹⁾, A⁽²⁾, A⁽³⁾ und die Fahrzeuggeschwindigkeit V zugeführt. In den anschließenden Schichten führen die mit "+" markierten Blöcke eine Addition aller Eingänge durch, die mit "x" markierten Blöcke führen hingegen eine Multiplikation der zugeführten Signale aus. Die mit "S" markierten Blöcke berechnen als Ausgangssignal den Wert der Funktion 1/(1+exp(-SUM)), wobei SUM die Summe aller Blockeingänge bezeichnet. Die Anzahl der "S"-Blöcke ist variabel, wobei in Fig. 9 stellvertretend der Übersichtlichkeit halber nur zwei gezeigt sind. Ausgangsseitig beinhaltet die Schätzeinheit 8 ein zeitdiskretes Tiefpaßfilter TP6 mit einer geeigneten Zeitkonstante K11, die in der Regel im Sekundenbereich liegt. Alle Kanten zwischen den Eingangsblöcken und den "S"-Blöcken sowie zwischen den "S"-Blöcken und den darauffolgenden Multiplikationsblöcken sind mit veränderbaren Gewichten versehen, wie für solche neuronalen Netze allgemein bekannt. Dabei ist aus der Theorie neuronaler Netze weiter bekannt, daß bei ausreichender Anzahl von "S"-Knoten durch geeignete Wahl von Gewichtswerten eine beliebige Abbildung dargestellt werden kann, siehe die sogenannte Funktionalapproximation durch Mehrschicht-Perceptronnetz. Die Schätzerstruktur gemäß Fig. 9 besteht somit aus einer nichtlinearen Funktion mit den Argumenten A, A⁽¹⁾, A⁽²⁾, A⁽³⁾, V, deren Wert durch den Tiefpaß TP6 geglättet wird.

Zur Bestimmung derjenigen Gewichte, für welche die Schätzeinheit 8 ein optimales Verhalten erreicht, wird ein herkömmliches numerisches Optimierungsverfahren benutzt. Die dabei zu minimierende Funktion hat die Eigenschaft, daß sie dort ihr Minimum hat, wo die Schätzeinheit 8 optimale, d.h. gerade die von ihr geforderten Eigenschaften hat. Das Verfahren, die Schätzeinheit auf ein Minimum der Summe von quadratischen Abständen zwischen jedem Meßwert und dem jeweiligen Schätzwert zu optimieren, ist vorliegend ungeeignet, da bei einer nichtlinearen Schätzeinheit der minimale quadratische Abstand keine Garantie für die Unverzerrtheit des Schätzers, d.h. für eine im langfristigen Mittel genaue Schätzung liefert. Im vorliegenden Fall der Reifendruckschätzung ist jede Einzelschätzung aufgrund der unbekannten störenden Straßenanregung mit einem so großen Zufallsfehler belastet, daß nur ein langfristiger, über mehrere Sekunden mittelnder Durchschnittswert dieser Schätzungen verwertbar ist. Dieser langfri-. stige Durchschnittwert liegt jedoch nur dann in der Nähe des wahren Druckwertes, wenn die Schätzeinheit unverzerrt arbeitet. Deshalb ist vorliegend vorgesehen, für die Optimierung der Schätzeinheit 8 die quadratische Abweichung des durchschnittlichen, über eine gewisse Anzahl von Abtastperioden geschätzten Druckwertes vom durchschnittlichen Meßwert zu minimieren. Dies kann durch irgendeines der dem Fachmann hierfür geläufigen numerischen Optimierungsverfahren erfolgen.

Fig. 10 zeigt die wie vorstehend beschrieben trainierte Schätzeinheit 8 in ihrer Anwendungsphase, d.h. im Einsatz innerhalb einer entsprechenden Vorrichtung zur Fahrzeugreifenluftdrucküberwachung. Die Vorrichtung beinhaltet, wie aus Fig. 10 ersichtlich, die bereits in der Aufzeichnungsphase verwendete Vorverarbeitungseinrichtung mit dem analogen Tiefpaßfilter 1, dem A/D-Wandler 2, dem digitalen Tiefpaßfilter 3 und dem Hochpaß-Offsetfilter 4 sowie als weitere Komponenten neben der trainierten Schätzeinheit 8 die Systemzustandsbestimmungseinheit 5, die Straßenzustandsbestimmungseinheit 6 und den Sequenzer 7, die ebenfalls bereits in der Aufzeichnungsphase verwendet wurden. Der Aufbau der Reifendrucküberwachungsvorrichtung gemäß Fig. 10 entspricht demjenigen der Datenaufzeichnungsanordnung von Fig. 1 mit der Ausnahme, daß der Speicher 9 durch die trainierte Schätzeinheit 8 ersetzt ist und nun kein Istdrucksignal mehr vorhanden ist. Das vom Sequenzer 7 abgegebene Taktsignal T1 sorgt dafür, daß die Schätzeinheit 8 in der Anwendungsphase nur dann aktiviert wird, wenn die Bedingungen für den Straßenzustand ausreichend lange erfüllt sind, so daß die optimierte, trainierte Schätzeinheit 8 die Verarbeitung der zeitlichen Dynamik der vertikalen Achsbeschleunigung A einschließlich ihrer ersten drei Ableitungen A⁽¹⁾, A⁽²⁾, A⁽³⁾ zusammen mit der Fahrzeuggeschwindigkeit V zwecks indirekter Bestimmung des zugehörigen Reifendrucks P auszuführen vermag. Die Reifendrucküberwachungsvorrichtung überbrückt dabei diejenigen Phasen, in denen eine sichere Schätzung wegen ungeeigneter Straßenanregungen nicht möglich ist, dadurch, daß der Straßenzustand über die Straßenzustandsbestimmungseinheit 6 beobachtet und über diese die ungeeigneten Phasen ausgeblendet werden. Es versteht sich, daß mit dieser Vorrichtung der absolute Reifendruck für jedes Fahrzeugrad einzeln unabhängig von den anderen Fahrzeugrädern indirekt ermittelt werden kann. Des weiteren versteht sich, daß anstelle der beschriebenen sensorischen Erfassung der vertikalen Achsbeschleunigung die vertikale Beschleunigung irgendeiner anderen, mit dem überwachten Fahrzeugreifen verbundenen Fahrzeugkomponente, insbesondere der Radaufhängung, sensorisch erfaßt und für die Reifendruckbestimmung verwendet werden kann.

Weitere mögliche Realisierungen der erfindungsgemäßen Fahrzeugreifendrucküberwachungsvorrichtung sind in den Fig. 11 bis 13 gezeigt. Die Vorrichtung von Fig. 11 beinhaltet eine Vorverarbeitungseinrichtung, die eingangsseitig ein das vertikale Achsbeschleunigungssignal filterndes Anti-Aliasing-Filter 100 sowie daran anschließend einen A/D-Wandler 101, eine FFT-Einheit 102 zur Durchführung einer Fast-Fourier-Transformation und eine Selektionseinheit 103 umfaßt. Das Anti-Aliasing-Filter 100 verhindert Abtastfehler durch den nachfolgenden A/D-Wandler 101 und ist so gewählt, daß die Systemdynamik in den Meßdaten ausreichend abgebildet wird. Der A/D-Wandler 101 digitalisiert das zugeführte analoge und gefilterte Achsbeschleunigungssignal mit einer der Systemdynamik entsprechend gewählten Abtastrate und Auflösung. Die FFT-Einheit 102 zerlegt das digitalisierte Achsbeschleunigungssignal in seine spektralen Bestandteile und die Selektionseinheit 103 wählt diejenigen spektralen Anteile aus, welche die wesentliche Information über den Reifendruck enthalten.

An die Vorverarbeitungseinrichtung schließt sich als trainierbare Schätzeinheit 104 wiederum ein neuronales Mehrschicht-Perceptronnetz an, das z.B. drei bis vier vorwärts gekoppelte Schichten, d.h. eine oder zwei versteckte Schichten zwischen Eingangs- und Ausgangsschicht, beinhaltet und die Funktion hat, aus den von der Selektionseinheit 103 gelieferten spektralen Anteilen der Achsbeschleunigungsinformation auf den zugehörigen Reifendruck zu schließen. Dazu wird es in einer der eigentlichen Anwendungsphase vorangehenden Trainingsphase geeignet trainiert, in welcher die Vorverarbeitungseinrichtung bereits aktiv ist. In dieser Trainingsphase wird wiederum die Differenz zwischen dem Ausgangssignal des neuronalen Netzes 104 und des zugehörigen gemessenen Reifendruckistwertes, der den Ausgangssignalsollwert für das neuronale Netz 104 bildet, durch einen Optimierungsalgorithmus zur Anpassung der Gewichte zwischen den Neuronenschichten verwendet. Die Wahl der Trainingsbeispiele bestimmt in an sich bekannter Weise die Eigenschaften des trainierten neuronalen Netzes 104 auch hinsichtlich der Reifendruckauswertung.

Ein dem neuronalen Netz 104 nachgeschaltetes Stochastikfilter 105 dient der Stabilisierung der vom Netz 104 gelieferten Reifendruckschätzwerte, und eine anschließende Linearisierungseinheit 106 linearisiert das Schätzsignal, wodurch die beim neuronalen Netz 104 an den Wertebereichsenden möglicherweise auftretenden Verzerrungen unterdrückt werden. Zudem ist für die Linearisierungseinheit 106 eine Kalibrierungsfähigkeit vorgesehen, mit der statische Abweichungen korrigiert werden können, wie sie z.B. durch Veränderungen der Fahrzeuglast oder durch die Alterung der Fahrzeugreifen verursacht werden.

Mit dem Stochastikfilter 105 kann sichergestellt werden, daß nur Druckprognosen im trainierten Geschwindigkeitsbereich ausgewertet werden, wozu der vom neuronalen Netz 104 gelieferte Druckschätzwert durch ein Geschwindigkeitsfenster bewertet wird, bevor es durch ein Tiefpaßfilter geglättet wird. Ein hierfür geeigneter Aufbau ist in Fig. 14 mit dem Geschwindigkeitsfenster 107 und den anschließenden Tiefpaßkomponenten dargestellt. Der dort angegebene Parameter Trägheit" bestimmt die Grenzfrequenz des Tiefpaßfilters und wird so gewählt, daß das Ausgangssignal des neuronalen Netzes 104 ausreichend geglättet wird.

Alternativ zum einfachen Tiefpaßfilteraufbau gemäß Fig. 14 ist ein nichtlineares Tiefpaßfilter mit dem in Fig. 15 gezeigten Aufbau im Anschluß an das Geschwindigkeitsfenster 107 verwendbar. Mit diesem kann Verfälschungen vorgebeugt werden, die ansonsten entstehen könnten, wenn das Fahrzeug längere Zeit in einem Zustand betrieben wird, der nicht ausreichend durch vorher aufgenommene Trainingsbeispiele abgedeckt ist. Ein einfaches Tiefpaßfilter müßte hierzu eine sehr lange Zeitkonstante erhalten, die sich verlangsamend auf seine Reaktionszeit auswirkt. Das nichtlineare Tiefpaßfilter von Fig. 15 verwendet statistische Größen, die aus dem Ausgangssignal der Schätzeinheit 104, d.h. aus dem neuronalen Netz, gewonnen werden, um die Reaktionsgeschwindigkeit des Filters anzupassen. Dieser Maßnahme liegt die Tatsache zugrunde, daß der Reifendruckschätzung durch das neuronale Netz 104 immer auch ein gewisser Anteil der stochastischen Anregung durch die Straße als Rauschen überlagert ist. Dieses Rauschen ist um so mehr unterdrückt, je besser das neuronale Netz 104 auf seine Reifendruckbestimmungsaufgabe trainiert wurde. Somit geben die verwendeten Varianzen "Varianz 1" und "Varianz 2" des Netzausgangssignals einen Hinweis darauf, wie gut das Netz 104 die aktuelle Situation verarbeiten kann. Dem wird im nichtlinearen Tiefpaßfilter von Fig. 15 dadurch Rechnung getragen, daß Schätzwerte mit großem Abstand zum Reifensolldruck weniger stark bewertet werden als solche mit geringem Abstand. Dadurch kann das neuronale Netz 104 auch noch in Bereichen zufriedenstellend betrieben werden, für die es nur unzureichend trainiert wurde. Der Parameter "Varianz 1" gibt dabei an, wie stark aktuelle Abweichungen bewertet werden. Im Betrieb des Netzes 104 können zudem Sollwertabweichungen aufgrund von über eine begrenzte Zeit andauernden, unbekannten Fahrsituationen auftreten. Der Parameter "Varianz 2" benutzt die durchschnittliche Abweichung in einem Zeitraum von z.B. etwa 5s bis 10s. Dies unterdrückt wirksam Fehler aufgrund von bestimmten, zeitlich befristeten Fahrmanövern, wie einem Brems- oder Beschleunigungsvorgang oder einer Kurvenfahrt. Der für die Bewertung notwendige Sollwert wird rekursiv aus dem gefilterten Druckwert gewonnen. Im übrigen ergibt sich die Funktionsweise selbsterklärend aus dem Blockschaltbild von Fig. 15.

Das in Fig. 12 gezeigte weitere Ausführungsbeispiel entspricht demjenigen von Fig. 11 mit der Ausnahme, daß die FFT-Einheit 102 und die Selektionseinheit 103 durch eine Systemzustandsbestimmungseinheit 108 ersetzt ist, die im wesentlichen derjenigen des Beispiels der Fig. 1 bis 10 entspricht, indem sie aus dem zugeführten, gefilterten digitalisierten vertikalen Achsbeschleunigungssignal eine gewünschte Anzahl zeitlicher Ableitungen berechnet und diese dem anschließenden neuronalen Netz 104 zusätzlich zur vertikalen Achsbeschleunigung als Eingangsgrößen zuführt. Das neuronale Netz 104 wird nach dem zum Beispiel der Fig. 1 bis 10 beschriebenen Verfahren trainiert. Durch dieses Training kann auf die FFT-Einheit 102 und die Selektionseinheit 103 des Beispiels von Fig. 11 verzichtet werden. Außerdem genügt eine reduzierte Zahl von Eingangsneuronen, und das gesamte neuronale Netz 104 kann kleiner ausgelegt werden, was den Rechenaufwand verringert.

Fig. 13 zeigt ein weiteres Ausführungsbeispiel der Erfindung, das demjenigen von Fig. 12 mit der Ausnahme entspricht, daß auf das Anti-Aliasing-Filter 100 verzichtet wird. Dies vereinfacht die erforderliche Hardware erheblich und reduziert die benötigten Komponenten auf den A/D-Wandler 101 und die übrigen gezeigten, sämtlich auf einem gemeinsamen Microprozessor implementierbaren Komponenten. Bei diesem Ausführungsbeispiel wird der Optimierungsalgorithmus zum Trainieren des neuronalen Netzes 104 so gewählt, daß er in der Lage ist, die bei der Digitalisierung durch Verletzung des Abtasttheorems aufgrund des weggelassenen Anti-Aliasing-Filters 100 entstehenden Fehler zu unterdrücken.

Die vorstehende Beschreibung vorteilhafter Ausführungsbeispiele zeigt, daß mit der erfindungsgemäßen Vorrichtung zur Fahrzeugreifendrucküberwachung eine sehr zuverlässige indirekte Ermittlung des Reifendrucks anhand gemessener vertikaler Beschleunigungssignale einer zugehörigen Fahrzeugachse oder eines anderen, mit dem jeweiligen Rad in Verbindung stehenden Fahrzeugbauteils realisierbar ist. Vorteilhaft ist dabei, daß die vertikale Achsbeschleunigung eine Meßgröße ist, die ebenso wie die Fahrzeuggeschwindigkeit mittels herkömmlicher Sensorik direkt am Rad zur Verfügung steht und sich auf den Reifendruck direkt auswirkt. Es sind keine Veränderungen an Felge oder Radlager erforderlich. Im Vergleich zu anderen Reifendruckbestimmungsverfahren läßt sich der Reifendruck mit der erfindungsgemäßen Vorrichtung verhältnismäßig genau und stabil bestimmen. Die Vorrichtung ist mit vergleichsweise geringem Aufwand realisierbar und in der Lage, den Reifendruck nicht nur relativ, sondern absolut und für jedes Rad getrennt zu ermitteln. Die erfindungsgemäße Vorrichtung ist in der Lage, vor zu geringem Reifendruck zu warnen, spart entsprechenden Aufwand für eine Reifendruckprüfung ein, erhöht die Verfügbarkeit und Sicherheit des Fahrzeugs, unterstützt den Fahrer oder einen Fuhrpark bei der Fahrzeuginstanthaltung und ermöglicht eine Einsatzkontrolle durch den Fuhrpark sowie eine Verlängerung der Laufleistung der Reifen durch Einhalten des Solldrucks. Resultate zeigen, daß sich der Reifendruck mit der erfindungsgemäßen Vorrichtung mit einer Genauigkeit von besser als 10% ermitteln läßt. Für den Fall einer Zwillingsbereifung kann die Vorrichtung so ausgelegt sein, daß die Identifikation eines Reifenpaares mit einem richtigen und einem falschen Reifendruck auf der Basis des arithmetischen Mittels beider Reifendrücke sicher ermöglicht wird.

## Patentansprüche

1. Vorrichtung zur Überwachung des Drucks eines Fahrzeugreifens, mit
- einer Einrichtung zum Erfassen wenigstens der Vertikalbeschleunigung (A) des Reifens oder eines damit verbundenen Fahrzeugbauteils und der Fahrzeuglängsgeschwindigkeit (V) und
- einer Auswerteeinrichtung, die aus den Vertikalbeschleunigungs-Meßdaten und den Fahrzeuglängsgeschwindigkeits-Meßdaten den Reifenluftdruck (P) ermittelt,
**dadurch gekennzeichnet, daß**
- die Auswerteeinrichtung eine trainierbare Schätzeinheit (8), insbesondere ein neuronales Netz, beinhaltet, die anhand von vorgebbaren Trainingsbeispieldaten mit verschiedenen Reifenluftdruckwerten und Fahrzeuglängsgeschwindigkeitswerten trainiert wird und im trainierten Zustand den Reifenluftdruck (P) wenigstens in Abhängigkeit von den eingangsseitig direkt oder vorverarbeitet zugeführten Vertikalbeschleunigungs- und Fahrzeuglängsgeschwindigkeits-Meßdaten (A, V) ermittelt, und
- die Vorrichtung eine oder mehrere der folgenden Komponenten aufweist:
i) eine Einrichtung (6) zur Erzeugung einer Straßenzustandsinformation in Abhängigkeit von den Vertikalbeschleunigungs- und Fahrzeuglängsgeschwindigkeits-Meßdaten (A, V), mit der die Aktivierung und Deaktivierung der Schätzeinheit (8) in Abhängigkeit davon gesteuert wird, ob die momentane gemessene Vertikalbeschleunigung und Fahrzeuglängsgeschwindigkeit jeweils innerhalb oder außerhalb zugehöriger, vorgebbarer Wertebereiche liegen, und/oder
ii) eine der Schätzeinheit (104) nachgeschaltete Signalnachverarbeitungsstufe (105, 106) zur Unterdrückung von durch die Schätzeinheit gewonnenen Schätzwerten, die außerhalb eines vorgebbaren, trainierten Wertebereichs liegen, und/oder
iii) eine Vorverarbeitungseinrichtung, die eine A/D-Wandlereinheit (2) und eine nachgeschaltete Systemzustandsbestimmungseinheit (5) beinhaltet, welche eine oder mehrere zeitliche Ableitungen (A⁽¹⁾, A⁽²⁾, A⁽³⁾) der gemessenen Vertikalbeschleunigung (A) berechnet und diese neben der gemessenen Vertikalbeschleunigung der Schätzeinheit (8) als Eingangsgrößen zuführt, und/oder
iv) eine Vorverarbeitungseinrichtung, die eine A/D-Wandlereinheit (101) und eine nachgeschaltete FFT-Einheit (102) mit zugehöriger Selektionseinheit (103) beinhaltet, wobei die von der Selektionseinheit (103) ausgewählten Informationen der Schätzeinheit (104) als Eingangsgrößen zugeführt werden, und/oder
v) einen Datenspeicher (9), der in einer Aufzeichnungsphase zum Aufzeichnen von Trainingsbeispieldaten anstelle der Schätzeinheilt (8) eingesetzt ist und in welchen in dieser Aufzeichnungsphase die aufgenommenen Trainingsbeispieldaten eingespeichert werden, und eine Bewertungs- und Optimierstufe (10, 11), die in einer Trainingsphase der Schätzeinheit (8) nachgeschaltet ist, die in dieser Trainingsphase an den Datenspeicher (9) angeschlossen ist und anhand der darin gespeicherten Trainingsbeispieldaten unter Rückkopplung durch die Bewertungs- und Optimierstufe trainiert wird.

2. Vorrichtung nach Anspruch 1, weiter
**dadurch gekennzeichnet, daß**
die Vorverarbeitungseinrichtung ein der A/D-Wandlereinheit (101) vorgeschaltetes Anti-Aliasing-Filter (100) aufweist.

3. Vorrichtung nach Anspruch 1 oder 2, weiter
**dadurch gekennzeichnet, daß**
die Vorverarbeitungseinrichtung ein der A/D-Wandlereinheit (2) nachgeschaltetes digitales Tiefpaß-Glättungsfilter (3) mit anschließendem Hochpaß-Offsetfilter (4) beinhaltet.

## Claims

1. Device for monitoring the pressure of a vehicle tyre with
- a device for recording at least the vertical acceleration (A) of the tyre or a vehicle component connected with it and the vehicle longitudinal speed (V) and
- an evaluation device which ascertains the tyre air pressure (P) from the vertical acceleration measurement data and the vehicle longitudinal speed measurement data,
**characterised in that**
- the evaluation device contains a trainable estimating unit (8), in particular a neuronal network, which with the aid of specifiable training example data is trained with different tyre air pressure values and vehicle longitudinal speed values and in the trained status ascertains the tyre air pressure (P) at least depending upon the vertical acceleration and vehicle longitudinal speed measurement data (A, V) either directly supplied on the input side or supplied preprocessed,
- the device has one or several of the following components:
i) a device (5) for the production of road state information depending upon the vertical acceleration and vehicle longitudinal speed measurement data (A, V), with which the activation and deactivation of the estimating unit (8) is controlled depending upon whether the momentarily measured vertical acceleration and vehicle longitudinal speed respectively lie within or outside of associated, pre-specifiable value regions, and / or
ii) a signal subsequent processing stage (105, 106) connected after the estimating unit (104) for the suppression of estimation values obtained by the estimating unit which lie outside of a pre-specifiable trained value area, and / or
iii) a pre-processing device which contains an A/D converter unit (2) and a subsequently connected system status determination unit (5) which calculates one or several temporal differentials (A⁽¹⁾, A⁽²⁾, A⁽³⁾) of the measured vertical acceleration (A) and supplies the same as input values besides the measured vertical acceleration to the estimating unit (8) as input values and / or
iv) a pre-processing device which contains an A/D converter unit (101) and a subsequently connected FFT unit (102) with associated selection unit (103) wherein the information selected by the selection unit (103) is supplied to the estimating unit (104) as input values, and / or
v) a data storage device (9) which in a recording phase for the recording of training example data is used instead of the estimating unit (8) and in which in this recording phase the recorded training example data is stored, and an evaluation and optimisation stage (10, 11) which is subsequently connected in a training phase of the estimating unit (8) which is connected in this training phase to the data storage device (9) and with the aid of the training example data stored therein is trained through feedback through the evaluation and optimisation stage.

2. Device according to claim 1,
further **characterised in that**
the pre-processing device has an anti-aliasing filter (100) connected before the A/D converter unit (101).

3. Device according to claim 1 or 2,
further **characterised in that**
the pre-processing device has a digital low-pass smoothing filter (3) with connected high-pass offset filter (4) connected after the A/D converter unit (2).

## Revendications

1. Dispositif pour surveiller la pression d'un pneumatique de véhicule, doté
- d'un appareil pour capter au moins l'accélération verticale (A) du pneumatique ou d'un élément du véhicule relié à ce dernier et la vitesse longitudinale du véhicule (V) et
- d'un appareil d'interprétation déterminant la pression de gonflage des pneumatiques (P) à partir des données de mesure d'accélération verticale et des données de mesure de vitesse longitudinale du véhicule,
**caractérisé en ce que**
- l'appareil d'interprétation comprend une unité d'estimation (8) pouvant apprendre, en particulier un réseau neuronal, qui apprend au moyen de données d'exemples d'apprentissage définissables comportant diverses valeurs de pression de gonflage des pneumatiques et diverses valeurs de vitesse longitudinale du véhicule et qui détermine en état instruit la pression de gonflage du pneumatique (P) au moins en fonction de données de mesure d'accélération verticale et de vitesse longitudinale du véhicule (A, V) affectées directement du côté d'entrée ou par pré-traitement, et
- le dispositif comporte un ou plusieurs des éléments suivants :
i) un appareil (6) de génération d'informations sur l'état de la chaussée dépendant des données de mesure d'accélération verticale et de vitesse longitudinale du véhicule (A, V) à l'aide desquelles l'activation et la désactivation de l'unité d'estimation (8) est commandée selon que l'accélération verticale instantanée mesurée et la vitesse longitudinale du véhicule instantanée mesurée se trouvent dans ou en dehors d'une zone de valeur définissable correspondante, et/ou
ii) une étape de post-traitement du signal (105, 106) placée après l'unité d'estimation (104) pour supprimer les valeurs estimatives obtenues par l'unité d'estimation se trouvant en dehors d'une zone de valeur apprise définissable, et/ou
iii) un appareil de pré-traitement comportant une unité de convertisseur A/N (2) et une unité de détermination de l'état du système (5) placée en suivant calculant une ou plusieurs dérivations temporelles (A⁽¹⁾, A⁽²⁾, A⁽³⁾) de l'accélération verticale mesurée et affectant celle-ci en plus de l'accélération verticale mesurée par l'unité d'estimation (8) comme valeurs d'entrée, et/ou
iv) un appareil de pré-traitement comportant une unité de convertisseur A/N (101) et une unité d'analyseur FFT (102) placée en suivant dotée d'une unité de sélection (103) correspondante, les informations sélectionnées par l'unité de sélection (103) de l'unité d'estimation (104) étant affectées comme valeurs d'entrée, et/ou
v) une mémoire de données (9) utilisée dans une phase d'enregistrement pour l'enregistrement des données d'exemples d'apprentissage à la place de l'unité d'estimation (8) et dans laquelle les données d'exemples d'apprentissage enregistrées sont sauvegardées au cours de la phase d'enregistrement, et une étape d'estimation et d'optimisation (10, 11) placée en suivant dans une phase d'apprentissage de l'unité d'estimation (8) reliée dans cette phase d'apprentissage à la mémoire de données (9) et apprenant au moyen des données d'exemples d'apprentissage stockées ici par rétroaction au moyen de l'étape d'exploitation et d'optimisation.

2. Dispositif selon la revendication 1, **caractérisé en outre en ce que** l'appareil de pré-traitement comporte un filtre anti-repliement (100) placé avant l'unité de convertisseur A/N (101).

3. Dispositif selon la revendication 1 ou 2, **caractérisé en outre en ce que** l'appareil de pré-traitement comporte un filtre passe-bas de lissage (3) numérique placé après l'unité de convertisseur A/N (2) doté d'un filtre passe-haut excentré (4) fermant.
